# EUROPÄISCHE PATENTSCHRIFT

(11) **EP 2 771 519 B1**
(45) Veröffentlichungstag und Bekanntmachung des Hinweises auf die Patenterteilung: **30.12.2015**
(21) Anmeldenummer: 12784449.6
(22) Anmeldetag: 24.10.2012
(51) Int. Cl.: E04B 1/80

(54) **VERFAHREN ZUR BEFESTIGUNG EINER DECKPLATTE AN EINER RAHMENSTRUKTUR**
METHOD FOR FIXING A COVER PLATE TO A FRAME STRUCTURE
PROCÉDÉ DE FIXATION D'UNE PLAQUE DE COUVERTURE À UNE STRUCTURE DE CADRE

(30) Priorität: 28.10.2011 DE 102011117145
(43) Veröffentlichungstag der Anmeldung: 03.09.2014
(73) Patentinhaber: Lück, Stefan, 61169 Friedberg-Ockstadt (DE)
(72) Erfinder: Lück, Stefan, 61169 Friedberg-Ockstadt (DE)
(74) Vertreter: Harbach, Ulrich
(86) Internationale Anmeldenummer: PCT/EP2012/004443
(87) Internationale Veröffentlichungsnummer: WO 2013/060450

(56) Entgegenhaltungen:
- WO-A1-2009/118154
- AU-A- 2 925 471
- DE-U- 6 800 533

## Beschreibung

Die Erfindung betrifft ein Verfahren zur Befestigung einer Deckplatte an einer Rahmenstruktur. Sie betrifft weiter eine zum Ausführen des Verfahrens geeignete Rahmenstruktur. Darüber hinaus betrifft die Erfindung ein Verfahren zur Befestigung einer zwei im Wesentlichen parallel zueinander angeordnete Deckschichten umfassenden Deckplatte an einer Rahmenstruktur sowie ein zum Ausführen des Verfahrens geeignete Rahmenstruktur.

Derartige Verfahren und Rahmenstrukturen sind beispielsweise aus der AU-A2925471 und der DE-U-6800533 bekannt.

Eine der wichtigsten Herausforderungen für die Zukunft ist, den Verbrauch an Rohstoffen drastisch zu reduzieren. Insbesondere im Bausektor liegen hier sowohl für zukünftige Projekte, als auch im Bestand, erhebliche Potentiale brach. Das betrifft sowohl den durch die Nutzung entstehenden Verbrauch an Energie, als auch die graue Energie, die mit Bau, Erhalt und Abriss der Gebäude verbunden ist. Eine weitere Herausforderung besteht darin, erneuerbare Energie, möglichst ohne Konkurrenz zur Lebensmittelproduktion und zum Naturschutz, kostengünstig zu gewinnen und speicherbar zu machen.

Hinsichtlich der durch Nutzung des Gebäudes verbrauchten Energie liegt in jüngster Zeit einerseits der Fokus auf einer Verbesserung der Wärmeisolierung, andererseits auf der Nutzung erneuerbarer Energien.

Hinsichtlich der Wärmeisolierung kommen häufig Vakuumisolationspaneelen (VIP) und Vakuumisolationssandwichpaneelen (VIS) zur Anwendung, wobei letztere ein Stützkern aus pyrogener Kieselsäure, aus Mineralfasern oder aus anderen offenporigen Dämmstoffen verwenden, der die Unterbindung der Gaswärmeleitung bei höheren Restdrücken ermöglicht. Dadurch soll, bei geringeren Anforderungen an die Hülle, die langfristige Sicherung des Vakuums in den Paneelen ermöglicht werden. Zum Erhalt eines Hochvakuums müssten besonders die Ränder der Paneele mit z.B. permeationsdichtem Edelstahl ausgebildet werden, was im Vergleich zu z.B. alubedampfter Folie, eine höhere Wärmeleitung über die Randbereiche zur Folge hätte. Damit wäre der erzielbare U-Wert besonders bei kleineren Paneelen höher, als das bei folienumhüllten VIPs der Fall ist.

Bei Vakuumisolierverglasungen (VIG) hingegen ist es notwendig, dass ein Hochvakuum erzielt wird, da lediglich kleine Abstandhalter, die die Durchsicht kaum behindern dürfen, eingebaut werden. Die besondere Herausforderung liegt hier sowohl in der Randverbindung, die eine minimale Wärmeleitung mit maximaler Diffusionsdichtigkeit und leicht elastischen Verhalten kombinieren muss. Ebenso ist das Verhältnis von Volumen zu Oberfläche für das Erzielen und den Erhalt des Hochvakuums problematisch und erfordert ein sehr sauberes Arbeiten sowie eine hervorragende Reinigung der Oberflächen vor dem Zusammenfügen. Derartige VIGs sind beispielsweise aus der DE 10 2005 015 184 A1 bekannt. Sie umfassen typischerweise eine einfach gehaltene, massive Rahmenstruktur mit darauf angebrachten parallelen Deckschichten, wobei die Evakuierung durch Ventile in der Rahmenstruktur aus dem Zwischenraum zwischen den Deckschichten nach außen erfolgt.

Hinsichtlich der Nutzung von erneuerbaren Energien werden Bauten häufig mit Photovoltaik-Paneelen versehen. Die verbauten Flächen erreichen hier immer größere Dimensionen mit immer dünneren Paneeldicken (z.B. Glasstärken von 2 mm zur Reduzierung der Materialkosten), gleichzeitig nimmt der Zeit- und Kostendruck immer mehr zu, da der Fertigstellungstermin oft entscheidend für die Höhe der Einspeisevergütung ist.

Es ist daher Aufgabe der Erfindung, ein Verfahren zur Befestigung einer Deckplatte, insbesondere einer zwei im Wesentlichen parallel zueinander angeordnete Deckschichten umfassenden Deckplatte, wie z.B. eines Vakuumisolierpaneels oder eines Photovoltaikpaneels an einer Rahmenstruktur sowie für die Verfahren geeignete Rahmenstrukturen anzugeben, die besonders einfach und schnell die Errichtung stabiler und langfristig haltbarer Flächen erlauben und im Falle von Vakuumisolierpaneelen gleichzeitig einen besonders guten Erhalt des Vakuums in den Paneelen ermöglichen.

Diese Aufgabe wird erfindungsgemäß gelöst durch ein Verfahren zur Befestigung einer Deckplatte an einer an die Deckplatte angeformten Rahmenstruktur, wobei die Rahmenstruktur einen Hohlraum, eine Anzahl von den Hohlraum mit einer Oberfläche verbindenden Kanälen und eine Öffnung zum Anschluss einer Vakuumpumpe aufweist, wobei der Hohlraum bis auf die Kanäle und die Öffnung gasdicht ist, und wobei eine Vakuumpumpe an die Öffnung angeschlossen und in Betrieb genommen wird, die Deckplatte an der Oberfläche über den Kanälen angeordnet wird, und die Deckplatte an der Oberfläche fixiert wird.

Die Erfindung geht dabei von der Überlegung aus, dass eine besonders einfache Errichtung großer Paneelflächen dadurch erreicht werden könnte, dass die Nutzung der Vakuumtechnik vor Ort zur Fixierung und Stabilisierung der Paneele als Deckplatten erfolgen sollte. Die Paneele werden durch die Vakuumbildung im Hohlraum und den entstehenden Luftsog durch die Kanäle an die Rahmenstruktur angesaugt. Dadurch können flexibel vor Ort die Paneele an der Rahmenstruktur befestigt und so zu hervorragend stabilen Elementen beliebiger Größe zusammengesetzt werden. Die Kanäle können dabei sowohl der flachen Oberfläche der Deckplatte zugeordnet sein, so dass das Paneel auf der Rahmenstruktur aufliegt, oder aber einem Randbereich der Deckplatte, so dass dieses in den Rahmen eingefügt ist. Das Vakuum kann bei dauerhafter Abdichtung auch zur permanenten Fixierung der Deckplatte an der Rahmenstruktur dienen.

In vorteilhafter Ausgestaltung ist dabei zwischen Oberfläche und Deckplatte ein Dichtelement angeordnet. Hier kann beispielsweise ein Elastomer zur Anwendung kommen, das als zusätzliche Dichtung zwischen Hohlkammerprofil und Deckschicht angebracht oder von Anfang an mit der Deckschicht oder dem Rahmen verbunden wird. Bei Integration in das Rahmenprofil sollte das Elastomer in gleicher Weise wie die Rahmenstruktur gelocht bzw. perforiert sein, um den Luftsog zu erlauben.

In weiterer vorteilhafter Ausgestaltung wird zwischen Oberfläche und Deckplatte ein Klebstoff angebracht. Dadurch wird auf einfache Weise eine dauerhafte Fixierung der Deckplatte an der Rahmenstruktur gewährleistet. Ist allerdings ein Erhalt des Vakuums in der Rahmenstruktur als dauerhafte Fixierung angedacht, kann der Klebstoff als Fixierung im Falle eines Vakuumverlusts dienen. Beispielsweise kann hier ein thermoplastischer Klebfilm zur Anwendung kommen, der durch Erwärmen flexibel und nach dem Erkalten fest wird. Beim Rückbau oder dem Auswechseln der Deckschicht können so die Komponenten durch erneutes Erwärmen zerstörungsfrei getrennt werden. Selbstverständlich sind aber auch alle anderen für den jeweiligen Einsatzzweck/die Materialkombination geeigneten Klebstoffe verwendbar.

In weiterer vorteilhafter Ausgestaltung ist zwischen Oberfläche und Deckplatte ein lösbares mechanisches Verbindungsmittel angebracht. Dieses ermöglicht ebenfalls eine einfache dauerhafte Fixierung. Beispielsweise kann hier eine in der Art einer Nut und Feder aufgebaute Clipverbindung, Druckknöpfe, Verschraubung oder Klettverbindung zur Anwendung kommen. Das zusätzliche mechanische Verbindungsmittel kann mit der Deckplatte verklebt werden, jedoch nicht mit dem Hohlkammerrahmenprofil. Bei einem Austausch der Deckschicht kann somit das Profil direkt und ohne Reinigungsarbeiten (z.B. Entfernen von Kleberesten) weiter verwendet werden. Auch hier sind die Deckschichten bei Vakuumverlust sicher gegen z.B. Herabfallen. Zusätzliche Sicherheit kann durch Verschraubung an mehreren Stellen oder durch eingedrückte Gummi- oder sonstige Rundschnüre oder durch andere mechanische Befestigungsmittel erzielt werden. Im Falle einer Nut-Feder-Clipverbindung kann die Aussparung an dem Hohlkammerrahmenprofil auch als Führungsschiene für die nachträgliche z.B. spanende Verarbeitung der Deckschicht genutzt werden. Deckschichten mit Übermaß können nach der spannungsfreien Befestigung somit nachbearbeitet werden.

Zur zusätzlichen Absicherung des Vakuums oder für eine flexiblere Handhabung während des Aufbaus kann die Rahmenstruktur auch in mehrere Hohlräume aufgeteilt sein. Zusätzlich oder alternativ wird vorteilhafterweise eine Mehrzahl von Deckplatten angeordnet und/oder die Rahmenstruktur weist eine Mehrzahl von jeweils einer Deckplatte zugeordneten Hohlräumen aufweist. Dadurch sind einerseits besonders große Rahmenkonstruktionen erreichbar. Andererseits können an mehreren Seiten der Rahmenstruktur Deckplatten angebracht werden. Eine besonders bevorzugte Anwendung eines Rahmens mit beidseitigen Kontaktflächen dient auch zur nachträglichen Anbringung von Platten (Werbeträger, Photovoltaik-Module o.a.) auf bestehenden Wänden. Besonders bei vorhandenen Sandwich-Paneelen, die sonst mit Schrauben oder Nieten durchbohrt werden müssten, kommen die Vorteile des Systems deutlich zum Tragen. Die Last wird flächig verteilt und die Verbindung erfolgt zerstörungsfrei.

Schließlich können durch eine derartige Ausgestaltung auch mehrere übereinander liegende Schichten erzeugt werden, wobei die Deckplatten selbst miteinander verbunden sind. Die Verbindung kann auch durch konische oder trapezförmige und damit stapelbare Streben mit anschließenden Muffen zur Befestigung an der nächsten Deckplatte erfolgen.

In vorteilhafter Ausgestaltung bildet die Rahmenstruktur mit der Deckplatte und einem weiteren Verschlusskörper einen zentralen Hohlraum und der zentrale Hohlraum wird evakuiert. Dies erlaubt eine dauerhafte Fixierung des Paneels sowie eine gleichzeitige Isolierung der gesamten Fläche durch das Vakuum.

Vorteilhafterweise liegt dabei der Druck des zentralen Hohlraums unter dem Druck des Hohlraums der Rahmenstruktur. Zum Herstellen einer Hochvakuumdämmung im zentralen Hohlraum ist es nämlich sinnvoll, zwischen dem atmosphärischen Druck und dem Hochvakuum eine zusätzliche Barriere in den Randbereichen vorzusehen. Bei diffusionsdichten Deckschichten, wie z.B. Glas oder Aluminium o.a., stellt die Anzahl der durch die Deckschichten eintretenden Moleküle nämlich kaum ein Problem dar. Durch die Randbereiche, die vorzugsweise elastisch und somit spannungsfrei ausgebildet sein sollen, können Moleküle hingegen relativ leicht eindringen. Hier bietet der Hohlraum der Rahmenstruktur eine einfache Möglichkeit: Wird das Profil selbst auf ein Grobvakuum (oder Feinvakuum) mit ca. 0 bis 200 mbar gebracht, so ist nahezu kein Druckunterschied zwischen dem Rahmenprofil und dem Hochvakuumbereich vorhanden. Dieser fehlende, bzw. nur geringe Druckunterschied begrenzt die Anzahl der durch die Abdichtung in den Hochvakuumbereich eintretenden Moleküle auf ein Minimum. Dies ergibt sich analog aus der Berechnung von Leckraten in Vakuumsystemen, bei der neben der Leckgröße der Druckunterschied der bestimmende Faktor ist.

Vorteilhafterweise eignet sich eine Rahmenstruktur, aufweisend einen Hohlraum, eine Anzahl von den Hohlraum mit einer Oberfläche verbindenden Kanälen und eine Öffnung zum Anschluss einer Vakuumpumpe wobei der Hohlraum bis auf die Kanäle und die Öffnung gasdicht ist, zum Ausführen des beschriebenen Verfahrens.

Die Aufgabe wird weiterhin gelöst durch ein Verfahren zur Befestigung einer zwei im Wesentlichen parallel zueinander angeordnete Deckschichten umfassenden Deckplatte an einer an den Randbereich der Deckplatte angeformten Rahmenstruktur, wobei die Rahmenstruktur einen ersten Hohlraum und einen den ersten Hohlraum zumindest teilweise umschließenden zweiten Hohlraum, eine Anzahl von den ersten Hohlraum mit einer Oberfläche verbindenden Kanälen und eine Öffnung zum Anschluss einer Vakuumpumpe aufweist, wobei eine Vakuumpumpe an die Öffnung angeschlossen und in Betrieb genommen wird, die Deckplatte mit ihrem Randbereich an der Oberfläche derart über den Kanälen angeordnet wird, dass diese zwischen den beiden Deckschichten der Deckplatte liegen, und der erste und der zweite Hohlraum evakuiert werden, wobei der zweite Hohlraum einen höheren Druck als der erste Hohlraum aufweist.

Für Anwendungen, bei denen der Abstand zwischen zwei Deckschichten sehr gering sein muss und gleichzeitig eine Hochvakuumdämmung zwischen den Deckschichten erforderlich ist, kann die Rahmenstruktur auch außerhalb der Deckschichten angebracht werden. Das Hohlkammerprofil ist dann doppelwandig herzustellen und eventuell mit Auskragungen zu versehen, an denen z.B. Glasscheiben befestigt werden. Das Profil bildet in diesem Fall einen Vakuumpuffer für das Bauteil und bietet die Möglichkeit, Anschlüsse für Vakuumpumpen zu integrieren.

Vorteilhafterweise ist dabei die Rahmenstruktur im Bereich der Kanäle trennbar ausgestaltet. Bei minimalen benötigten Abständen der Deckschichten kann nämlich der äußere Rahmen für das Grobvakuum z.B. zweigeteilt ausgeführt werden. In diesem Fall werden die Deckschichten zwischen dem Anschluss des Hochvakuumprofils und dem Grobvakuumprofil eingeklemmt.

Vorteilhafterweise eignet sich eine Rahmenstruktur, umfassend einen ersten Hohlraum und einen den ersten Hohlraum zumindest teilweise umschließenden zweiten Hohlraum, eine Anzahl von den ersten Hohlraum mit einer Oberfläche verbindenden Kanälen und eine Öffnung zum Anschluss einer Vakuumpumpe, zum Ausführen des beschriebenen Verfahrens.

Ein Hohlraum der Rahmenstruktur beinhaltet dabei vorteilhafterweise ein offenporiges Dämmmaterial. Die Integration einer oder mehrerer Schichten eines offenporigen Dämmmaterials bei Verbleib eines freien Hohlraums als Evakuierungskanal/-schicht ermöglicht es auch bei höheren Restdrücken, bzw. bei höherer Restmolekülanzahl, als beim Hochvakuum, die Dämmwirkung deutlich zu verbessern. Dadurch lässt sich außerdem bei dünnwandigen Rahmenstrukturen die Stabilität erhöhen, so dass der Materialaufwand reduziert wird. Dafür können sowohl feste "Blöcke", die Evakuierungskanäle aufweisen, als auch rieselfähiges Material, sowie eine Kombination aus beiden verwendet werden. Auch kann das Profil (unter Beachtung der Notwendigkeit von Evakuierungskanälen). ausgeschäumt werden.

Besonders bevorzugt ist die Verwendung von Blähglasgranulat als Füllmaterial, da so das Gesamtgewicht der Hohlprofile niedrig bleibt. Je nach Verwendungszweck und Einsatzort können aber auch andere, lokal verfügbare Füllstoffe genommen werden - z.B. Olivenkerne oder andere Reststoffe, die den Anforderungen genügen (die Eignung hängt sehr stark von dem zu erzielenden Enddruck ab). Leerrohre für die geschützte Verlegung von z.B. Kabeln bei Photovoltaik-Anlagen, sowie zusätzliche mit Öffnungen versehene Rohre zur besseren Evakuierung können in der Füllung verlegt werden.

Vorteilhafterweise weist die Rahmenstruktur dabei einen im Wesentlichen trapezförmigen Querschnitt auf. Dadurch ist die Rahmenstruktur stapelbar und besonders einfach zu transportieren. Dabei ist vorteilhafterweise die der längeren der parallelen Seiten des Trapezes entsprechende Oberfläche lösbar. Da nämlich die Hohlprofile der Rahmenstruktur mit Löchern versehen sein müssen, um mit einer Platte verbunden zu werden, ist es nicht notwendig, sie in Längsrichtung zu verschließen. Somit können z.B. durch Abkanten von Standardblechen rinnenförmige Teile hergestellt werden, die wie beschrieben stapelbar sind. Durch Anbringung einer Abdeckplatte, in die vorzugsweise direkt die Kanäle eingebracht sind, da bei einer Veränderung so nur die Abdeckplatte erneuert werden muss, die z.B. so abgekantet ist, dass sie auch ohne Verklebung mit dem rinnenförmigen Teil verbunden werden kann, wird das Hohlprofil dann aus zwei (oder mehr) Komponenten vor Ort hergestellt. Die Stapelbarkeit verringert sowohl Lager-, als auch Transportaufwand erheblich.

Bei einem evakuierbaren Rahmen, der mit einem rieselfähigem Granulat (oder anderem Füllmaterial) gefüllt ist, welches nicht oder nur eingeschränkt kraftschlüssig miteinander verklebt ist, ist es bevorzugt, zwischen einer abnehmbaren Abdeckplatte und dem Füllmaterial ein Lochblech oder -gitter (evtl. mit einem zusätzlichen Vlies verbunden) anzubringen. Beim Entfernen der Abdeckplatte bleibt so der Inhalt weiter in dem Rahmen und rieselt nicht heraus.

In weiterer vorteilhafter Ausgestaltung umfasst die Rahmenstruktur weiterhin ein elektrisches Verbindungselement. Bei der Verwendung der Hohlprofile als Unterkonstruktion für z.B. rahmenlose Phötovoltaik-Module kann eine Steckdose integriert werden. Ist das Photovoltaik-Modul z.B. vor der Montage mit einem fest angebrachten Stecker an der Unterseite versehen, so wird die Verbindung in einem Arbeitsschritt mit der Anbringung auf dem Hohlprofil hergestellt und es gibt keine freiliegenden Kabel, die zusätzlich geschützt werden müssen. Auf gleiche Art und Weise lassen sich z.B. auch Lampensysteme verbinden.

Die mit der Erfindung verbundenen Vorteile bestehen insbesondere darin, dass durch die Nutzung des Vakuums zum Aufbau und ggf. zur dauerhaften Befestigung einer Deckplatte an einer Rahmenstruktur eine besonders leichte, schnelle und vorspannungsfreie Konstruktion großflächiger Isolierpaneele oder Photovoltaikpaneele möglich wird. Darüber hinaus ist bei einer Befestigung von VIG (Vakuum-Isolier-Glas), VIS (Vakuum-Isolier-Sandwich) oder VIP (Vakuum-Isolier-Paneel) mit festen Deckschichten der Randverbund des Vakuum-Isolier-Elements nicht mehr dem atmosphärischen Druck ausgesetzt. Die Lebensdauer des Vakuums erhöht sich stark. Zusätzlich kann durch Umkehrung des Prinzips, d.h. eine Druckbeaufschlagung des Hohlraums die Deckschicht leicht von der Rahmenkonstruktion gelöst werden.

Die beschriebenen Rahmenstrukturen können auch zu Fachwerk- oder Gitterbindern zusammengefügt werden und so als Rahmenstrukturen für ganze Bauteile z.B. eines Gebäudes oder anderen großen Objekts dienen. Auch komplette Rahmenkonstruktionen aus derartigen Strukturen, die zu einem Rahmen (analog zu Stahl- oder Holzbauten) zusammengefügt werden, sind denkbar.

Durch Verwendung von Streben und den beschriebenen rinnenartigen Rahmenprofilen, wobei auch die Streben konisch ineinanderstabelbar sein können, sowie von Muffen für das dann schmale Ende der Streben, können Gitterbinder sehr platzsparend gelagert und transportiert werden. Vorkonfektionierung erleichtert das Zusammenfügen vor Ort, durch die Verklebung der Einzelteile mit oder ohne Elastomer zwischen den Kontaktflächen wird die thermische Belastung im Vergleich zum Schweißen deutlich vermindert. Die Verwendung von Füllstoffen ist sinnvoll. Selbstverständlich können so auch komplexere Binder hergestellt werden, z.B. gebogene Gitterbinder.

Wird das gesamte durch die Rahmenkonstruktion umfasste Bauteil anschließend evakuiert, kann - mit oder ohne Verklebung - unter Nutzung des atmosphärischen Drucks, aus relativ kleinen Einheiten ein großes Bauteil mit homogener Stabilität entstehen.

Ein Beispiel hierfür sind die Rotorblätter von Windkraftanlagen. Nach dem Stand der Technik werden sie als komplettes Bauteil in Verbundbauweise hergestellt. Diese zum Teil über 50m großen Bauteile stellen sehr hohe Anforderungen an Produktion und Logistik und sind nicht fehlertolerant. Eine Beschädigung der Bauteile erfordert oft deren Austausch, da Reparaturen nur eingeschränkt möglich sind. Die Recyclingfähigkeit von Produkten in Verbundbauweise ist außerdem sehr gering, da sich die verarbeiteten Materialien kaum sortenrein trennen lassen.

Die Überprüfung großflächiger Bauteile, wie z.B. die Rotorblätter von Windkraftanlagen, ist ebenfalls sehr komplex und erfordert einen hohen Zeitaufwand. Elektrisch leitende Schichten, die ein Monitoring über mögliche Schäden erlauben und eine zusätzliche Funktion für die Enteisung bieten, erhöhen Komplexität und Kosten in der Herstellung.

Wird ein Rotorblatt hingegen mit einer Grundstruktur aus evakuierten Hohlrahmenprofilen nach Art der Erfindung konzipiert und anschließend mit Deckschichten und dazwischen liegenden Abstandhaltern versehen und dieses entstehende Sandwich dann ebenfalls evakuiert, so ergibt sich ein erhebliches Kostensenkungspotenzial. Die Bauteile können ohne großen logistischen Aufwand vor Ort zusammengesetzt werden. Mit Vakuummessgeräten, die dauerhaft angeschlossen sind, lässt sich ein Defekt eines Segmentes sofort feststellen. Die Behebung dieses Defektes erfordert im Vergleich zu herkömmlichen Bauweisen nur einen minimalen Aufwand, da ein Austausch eines kleinen Segments ausreichend ist.

Der atmosphärische Druck, der gleichmäßig auf das komplette Bauteil einwirkt (Über- und Unterdruck, die im Betrieb auf das Rotorblatt einwirken, verändern diesen Wert), sorgt in Verbindung mit elastischen Elementen (z.B. Elastomere zwischen Deckschicht und Hohlrahmenprofil und evtl. zusätzlich zwischen Deckschichten und Kernstruktur) für spannungsspitzenfreie Stabilität.

Die Bauweise mit evakuierbaren Hohlrahmenprofilen eignet sich in hervorragender Weise weiterhin zur Produktion von sehr großvolumigen, eigenstabilen Bauteilen. Werden diese bevorzugt rotationssymetrisch ausgeführt, so ergibt sich die Möglichkeit, diese komplett zu evakuieren.

In Abhängigkeit von der Größe des gesamten Bauteils und dem Gewicht der verwendeten Materialien kann somit durch das Evakuieren des Bauteilinhalts eine signifikante Gewichtsminderung erzielt werden, die zur Folge hat, dass das Bauteil zumindest mit erheblich weniger Energieeinsatz bewegt werden kann, bzw. so leicht wird, dass sein Gewicht unter dem der verdrängten Luft liegt.

Leichter-als-Luft-Technologien, die z.B. bei Luftschiffen Stand der Technik sind, verwenden hauptsächlich Wasserstoff oder Helium als "Auftriebsmittel". Während Wasserstoff aufgrund der Gefahren im Umgang mit ihm wohl nur in Ausnahmefällen zum Einsatz kommen wird, ist bei Helium die Verfügbarkeit und der Preis ein stark begrenzender Faktor.

Der Druckunterschied, der sich bei einer Evakuierung z.B. eines zylindrischen Bauteils zwischen dem atmosphärischen Druck und dem Bauteilinhalt ergibt, erfordert eine sehr stabile Hüllstruktur. Die Bauweise, die in den vorangegangenen Absätzen beschrieben ist, ermöglicht die erforderliche Stabilität.

Ein großer Vorteil gegenüber z.B. Luftschiffen mit herkömmlichen Traggasen ist die Möglichkeit, durch das gezielte Fluten kleinerer abgetrennter Segmente in dem Hohlkörper, ohne die Verwendung von zusätzlichem Ballast für ein schnelles Austarieren und für eine gezielte, schnelle Landung sorgen zu können. Der Druckunterschied, der zum atmosphärischen Druck vorliegt, erleichtert diese Aufgabe. Ebenso geht bei diesem Vorgang kein teures Traggas verloren, es muss lediglich wieder in den gefluteten Bereichen neu evakuiert werden.

Die extrem einfache Bauweise und die hervorragende Recyclingfähigkeit die die Erfindung bietet, macht völlig neue Einsatzzwecke für die Leichter-als-Luft-Technologie möglich. So kann z.B. ein "Luftschiff" gebaut werden, dessen Hülle am Einsatzort als Behausung dient. Gerade bei Katastrophen, wie z.B. Erdbeben, bei denen die komplette Infrastruktur zerstört wird, ist der Transport von Hilfsgütern eine logistische Herausforderung, die kaum bewältigt werden kann. Mit einem solchen "Einweg-Luftschiff" wird das vor Ort benötigte Material selbst zum Transportmittel. Alle Materialien, die zum Bau verwendet werden, können zu 100% einem neuen Einsatzzweck zugeführt werden.

Durch die Verwendung photovoltaisch aktiver Oberflächen kann sogar die zum Bau und Betrieb des "Luftschiffs" benötigte Energie dezentral hergestellt werden. Auch hier können die verwendeten Photovoltaik-Elemente anschließend vor Ort eine Grundversorgung gewährleisten.

Beim Bau von Kühltürmen, Aufwindkraftwerken oder anderen rotationssymetrischen Bauwerken kann die Herstellung liegend erfolgen und die gesamte Hülle anschließend in die Senkrechte gebracht werden. Die Verwendung von Kränen und Verschalungen für den Bau wird somit weitgehend vermieden, die Hülle kann je nach Anforderung als verlorene Schalung verwendet werden. Halterungen für das Einfüllen von Beton oder anderen Füllmaterialien können beim Bau integriert werden.

Ebenso ist es möglich, einen solchen Baukörper als Gerüst und Wetterschutz für den Bau von Hochhäusern zu verwenden. Halterungen für das Anbringen weiterer Gerüstbauteile können in die Hülle integriert werden, zusätzliche verstärkende Elemente können im Zuge des Baufortschritts angebracht werden und die Funktion von Kränen kann ersetzt werden. Nach Fertigstellung des Bauwerks kann die Hülle komplett entfernt werden, sie kann aber auch komplett oder in Teilen in das Bauwerk integriert werden.

Die Erfindung wird anhand einer Zeichnung näher erläutert. Darin zeigen
- FIG 1: einen Querschnitt einer Rahmenstruktur mit außen aufliegender Deckplatte,
- FIG 2: einen Querschnitt einer Rahmenstruktur mit umschlossener Deckplatte,
- FIG 3: einen Querschnitt einer Rahmenstruktur mit zentralem, evakuierten Hohlraum,
- FIG 4: einen Querschnitt einer unterteilten Rahmenstruktur mit Clipsverbindung,
- FIG 5: einen Querschnitt einer doppelwandigen Rahmenstruktur mit umschlossener Deckplatte mit zwei Deckschichten und
- FIG 6: einen Querschnitt eines Gitterbinders mit trapezförmiger Rahmenstruktur und Streben.

Gleiche Teile sind in allen FIGs mit denselben Bezugszeichen versehen.

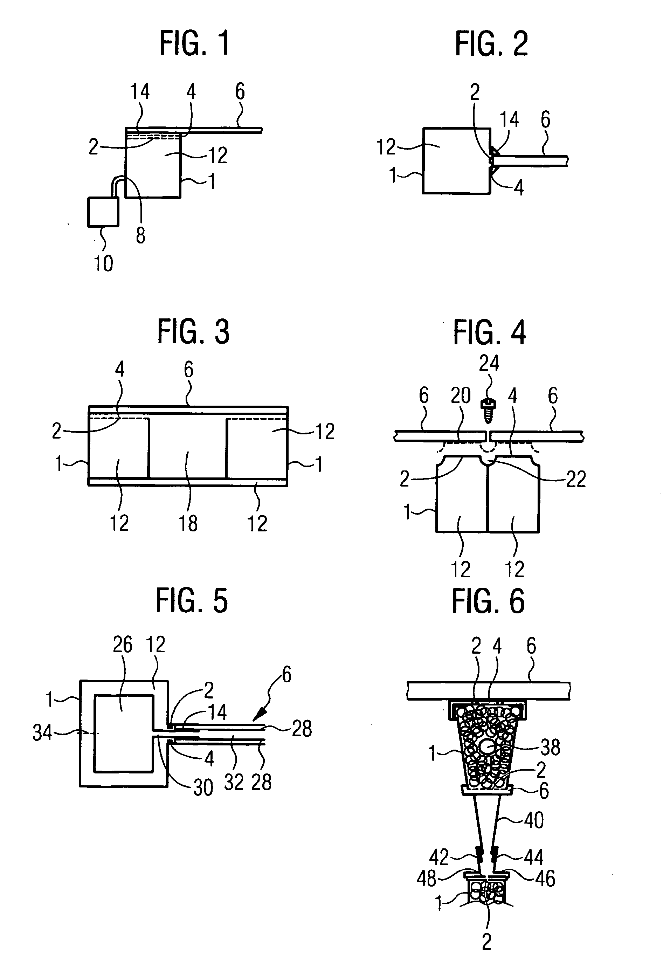

FIG 1 zeigt schematisch einen Querschnitt einer Rahmenstruktur 1. Diese weist eine Anzahl von Kanälen 2 zu einer Oberfläche 4 hin auf, an der eine Deckplatte 6 befestigt werden soll. Weiterhin weist die Rahmenstruktur 1 eine Öffnung 8 auf, an die eine Vakuumpumpe 10 angeschlossen ist. Die Vakuumpumpe 10 wird in Betrieb gesetzt, so dass der bis auf die beschriebenen Kanäle 2 und Öffnung 8 gasdichte Hohlraum 12 einen Unterdruck im Vergleich zur Umgebung aufweist.

Sodann wird die Deckplatte 6 über die Kanäle 2 gebracht und durch den Sog des Unterdrucks im Hohlraum 12 dort spannungsfrei fixiert. Zum besseren Halt und zur Verstärkung des Sogs ist hier ein Dichtelement 14 angeordnet, dass den Kanälen 2 angepasste Löcher aufweist, so dass Luft passieren kann, jedoch zum Außenraum hin abgedichtet wird.

Zur dauerhaften Fixierung der Deckplatte 6 wird nun die Vakuumpumpe 10 entfernt und die Öffnung 8 verschlossen, so dass der Unterdruck im Hohlraum 12 dauerhaft erhalten bleibt. Gleichzeitig ist zwischen Oberfläche 4 und Deckplatte 6 ein Klebstoff angebracht. Dieser sorgt für einen sicheren Halt auch bei Vakuumverlust im Hohlraum 12. Alternativ kann auch nur der Klebstoff zum Halt vorgesehen sein. Dies ermöglicht eine schnelle und spannungsfreie Anbringung z.B. eines Photovoltaikelements als Deckplatte 6.

Eine weitere Ausführungsform ist in FIG 2 gezeigt. (In allen weiteren FIGs ist die Vakuumpumpe 10 nicht mehr dargestellt.) Hier ist die Oberfläche 4 der Kante, d.h. dem Randbereich der Deckplatte 6 zugewandt. Die Funktion ist dabei analog zur FIG 1. Eine derartige Ausgestaltung kann z.B. für Vakuumisolierpaneele als Deckplatten 6 von Vorteil sein, da hier die Randbereiche durch das Vakuum im Hohlraum 12 bei dauerhafter Evakuierung vor Vakuumverlust geschützt sind.

FIG 3 zeigt eine Ausführungsform ähnlich FIG 1. Die Dichtelemente 14 sind nicht separat dargestellt. Hier bildet die Rahmenstruktur 1 zusammen mit einem Verschlusskörper 16 - im Ausführungsbeispiel ebenfalls eine Deckplatte - einen zentralen Hohlraum 18, der zusammen mit dem Hohlraum 12 dauerhaft evakuiert wird. Dabei wird im Hohlraum 12 lediglich ein Grobvakuum, im zentralen Hohlraum 18 ein Hochvakuum eingestellt. Das Grobvakuum minimiert die Leckrate aus dem Hohlraum 18.

FIG 4 zeigt eine Ausführungsform mit alternativer Befestigung gegenüber FIG 1. Die Rahmenstruktur 1 ist in zwei separat evakuierbare Hohlräume 12 aufgeteilt, die jeweils einer Deckplatte 6 zugeordnet sind. Dadurch können separat Deckplatten 6 angebracht werden. Die dauerhafte Befestigung wird durch eine an der Deckplatte 6 angebrachte, als Feder ausgestaltete Clipsverbindung 20 erreicht, wobei die Rahmenstruktur 1 dazu angepasste Nuten 22 aufweist. Zusätzlich können die Deckplatten 6 mittels einer Schraube 24 befestigt werden. Die Ausgestaltung gemäß FIG 4 erlaubt eine rückstandsfreie Demontage und Weiterverwendung der Rahmenstruktur 1. Die Demontage kann durch Druckbeaufschlagung des Hohlraums 12 erleichtert werden.

FIG 5 zeigt schließlich eine Ausgestaltung mit einer Rahmenstruktur 1, die innerhalb des Hohlraums 1 einen weiteren Hohlraum 26 umfasst. Die Kanäle 2 sind jeweils den Randbereichen zweier paralleler Deckschichten 28 zugewandt und funktionieren nach dem bereits beschriebenen Schema. Ein weiterer Kanal 30 verbindet jedoch den inneren Hohlraum 26 mit dem Innenraum 32 der Deckplatte 6, wobei wieder entsprechende Dichtelemente 14 angebracht sind.

Der innere Hohlraum 26 und der Innenraum 32 sind auf ein Hochvakuum evakuiert, so dass die Deckplatte 6 isolierend wirkt. Der Hohlraum 12 weist ein Grobvakuum auf, welches einerseits die Deckschichten 28 an der Rahmenstruktur 1 fixiert, andererseits als Schutzvakuum für das Hochvakuum dient. Somit wird die Leckrate minimiert. Die Rahmenstruktur 1 kann (auch bei den übrigen Ausführungsbeispielen) an einer Trennfläche 34 teilbar ausgestaltet sein. Dies erleichtert die Montage bei sehr dünnen Deckplatten 6.

FIG 6 zeigt schließlich eine weitere Ausgestaltungsform des Rahmenprofils 1 mit Kanälen 2 an Ober- und Unterseite. Das Rahmenprofil 1 ist als trapezförmiges, oben offenes Blech ausgestaltet, wodurch es sich stapeln lässt. Eine Abdeckplatte 36mit Kanälen 2 bildet die obere Oberfläche 4 des Rahmenprofils 1. Durch die Evakuierung werden beide Teile fest verbunden. Das Innere des Rahmenprofils 1 ist mit einem Füllstoff, z.B. Sand gefüllt, wobei ein Evakuierungskanal 38 verbleibt.

Die Deckplatte 6 am unteren Ende der Rahmenstruktur 6 hat einen konischen Fortsatz, der eine Strebe 40 bildet. Diese ist an ihrer unteren Seite geöffnet und ihr ist über ein Dichtelement 42 eine Muffe 44 angeformt. Die Muffe 44 ist ebenfalls konisch und hohl und bildet an ihrem unteren Ende eine Oberfläche 46 aus, an der ein zum ersten Rahmenprofil 1 umgekehrt angeordnetes Rahmenprofil 1 angepasst ist. Die Oberfläche 46 weist jedoch ebenfalls einen Kanal 48 auf, so dass das Vakuum aus dem unteren Rahmenprofil 1 sich in Muffe und Strebe hinein erstreckt und diese so fixiert.

### Bezugszeichenliste

- 1: Rahmenstruktur
- 2: Kanal
- 4: Oberfläche
- 6: Deckplatte
- 8: Öffnung
- 10: Vakuumpumpe
- 12: Hohlraum
- 14: Dichtelement
- 16: Verschlusskörper
- 18: Hohlraum
- 20: Clipsverbindung
- 22: Nut
- 24: Schraube
- 26: Hohlraum
- 28: Deckschicht
- 30: Kanal
- 32: Innenraum
- 34: Trennfläche
- 36: Abdeckplatte
- 38: Evakuierungskanal
- 40: Strebe
- 42: Dichtelement
- 44: Muffe
- 46: Oberfläche
- 48: Kanal

## Patentansprüche

1. Verfahren zur Befestigung einer Deckplatte (6) an einer an die Deckplatte (6) angeformten Rahmenstruktur (1),
**dadurch gekennzeichnet, dass**
die Rahmenstruktur (1) einen Hohlraum (12), eine Anzahl von den Hohlraum (12) mit einer Oberfläche (4) verbindenden Kanälen (2) und eine Öffnung (8) zum Anschluss einer Vakuumpumpe (10) aufweist, wobei der Hohlraum (12) bis auf die Kanäle (2) und die Öffnung (8) gasdicht ist, und wobei
die Vakuumpumpe (10) an die Öffnung (8) angeschlossen und in Betrieb genommen wird,
die Deckplatte (6) an der Oberfläche (4) über den Kanälen (2) angeordnet wird, und
die Deckplatte (6) an der Oberfläche (4) fixiert wird.

2. Verfahren nach Anspruch 1, bei dem zwischen Oberfläche (4) und Deckplatte (6) ein Dichtelement (14) angeordnet wird.

3. Verfahren nach einem der vorhergehenden Ansprüche, bei dem zwischen Oberfläche (4) und Deckplatte (6) ein Klebstoff angebracht wird.

4. Verfahren nach einem der vorhergehenden Ansprüche, bei dem zwischen Oberfläche (4) und Deckplatte (6) ein lösbares mechanisches Verbindungsmittel (20) angebracht ist.

5. Verfahren nach einem der vorhergehenden Ansprüche, bei dem eine Mehrzahl von Deckplatten (6) angeordnet wird und/oder die Rahmenstruktur (1) eine Mehrzahl von jeweils einer Deckplatte (6) zugeordneten Hohlräumen (12) aufweist.

6. Verfahren nach einem der vorhergehenden Ansprüche, bei dem die Rahmenstruktur (1) mit der Deckplatte (6) und einem weiteren Verschlusskörper (16) einen zentralen Hohlraum (18) bildet und der zentrale Hohlraum (18) evakuiert wird.

7. Verfahren nach Anspruch 6, bei dem der Druck des zentralen Hohlraums (18) unter dem Druck des Hohlraums (12) der Rahmenstruktur (1) liegt.

8. Verfahren zur Befestigung einer zwei im Wesentlichen parallel zueinander angeordnete Deckschichten (28) umfassenden Deckplatte (6) an einer an den Randbereich der Deckplatte (6) angeformten Rahmenstruktur (1),
**dadurch gekennzeichnet, dass**
die Rahmenstruktur (1) einen ersten Hohlraum (26) und einen den ersten Hohlraum (26) zumindest teilweise umschließenden zweiten Hohlraum (12), eine Anzahl von den ersten Hohlraum (26) mit einer Oberfläche (4) verbindenden Kanälen (30) und eine Öffnung (8) zum Anschluss einer Vakuumpumpe (10) aufweist, wobei
eine Vakuumpumpe (10) an die Öffnung (8) angeschlossen und in Betrieb genommen wird,
die Deckplatte (6) mit ihrem Randbereich an der Oberfläche (4) derart über den Kanälen (30) angeordnet wird, dass diese zwischen den beiden Deckschichten (28) der Deckplatte (6) liegen und
der erste und der zweite Hohlraum (12, 26) evakuiert werden, wobei der zweite Hohlraum (12) einen höheren Druck als der erste Hohlraum (26) aufweist.

9. Verfahren nach Anspruch 8, bei dem die Rahmenstruktur (1) im Bereich der Kanäle (30) trennbar ausgestaltet ist.

10. Rahmenstruktur (1), umfassend einen einen ersten Hohlraum (26) und einen den ersten Hohlraum (26) zumindest teilweise umschließenden zweiten Hohlraum (12), eine Anzahl von den ersten Hohlraum (26) mit einer Oberfläche (4) verbindenden Kanälen (30) und eine Öffnung (8) zum Anschluss einer Vakuumpumpe (10), geeignet zum Ausführen des Verfahrens nach Anspruch 8 oder 9.

11. Rahmenstruktur (1) nach Anspruch 10, bei der ein Hohlraum (12, 26) ein offenporiges Dämmmaterial beinhaltet.

12. Rahmenstruktur (1) nach Anspruch 10 oder 11, die einen im Wesentlichen trapezförmigen Querschnitt aufweist.

13. Rahmenstruktur (1) nach Anspruch 12, bei der die der längeren der parallelen Seiten des Trapezes entsprechende Oberfläche (4) lösbar ist.

14. Rahmenstruktur (1) nach einem der Ansprüche 10 bis 13, die ein elektrisches Verbindungselement umfasst.

## Claims

1. Method for fastening a cover plate (6) to a frame structure (1) which is integrally formed on the cover plate (6),
**characterised in that**
the frame structure (1) has a cavity (12), a number of channels (2) which connect the cavity (12) to a surface (4) and an opening (8) for the connection of a vacuum pump (10), the cavity (12) being gas-tight except for the channels (2) and the opening (8), and
the vacuum pump (10) being connected to the opening (8) and put into operation,
the cover plate (6) being arranged on the surface (4) above the channels (2), and
the cover plate (6) being fixed on the surface (4).

2. Method according to claim 1, in which a sealing element (14) is arranged between the surface (4) and the cover plate (6).

3. Method according to either of the preceding claims, in which an adhesive is applied between the surface (4) and the cover plate (6).

4. Method according to any of the preceding claims, in which a detachable mechanical connecting means (20) is attached between the surface (4) and the cover plate (6).

5. Method according to any of the preceding claims, in which a plurality of cover plates (6) is arranged and/or the frame structure (1) has a plurality of cavities (12) which are each assigned to a cover plate (6).

6. Method according to any of the preceding claims, in which the frame structure (1) together with the cover plate (6) and a further closure body (16) form a central cavity (18), and said central cavity (18) is evacuated.

7. Method according to claim 6, in which the pressure of the central cavity (18) is below the pressure of the cavity (12) in the frame structure (1).

8. Method for fastening a cover plate (6) which comprises two substantially parallel cover layers (28) to a frame structure (1) which is integrally formed on the edge region of the cover plate (6),
**characterised in that**
the frame structure (1) has a first cavity (26) and a second cavity (12) which surrounds the first cavity (26) at least in part, a number of channels (30) which connect the first cavity (26) to a surface (4) and an opening (8) for the connection of a vacuum pump (10),
a vacuum pump (10) being connected to the opening (8) and put into operation,
the cover plate (6) being arranged at its edge region on the surface (4) above the channels (30) such that the channels lie between the two cover layers (28) of the cover plate (6), and the first and the second cavities (12, 26) being evacuated, the second cavity (12) having a pressure which is higher than a pressure of the first cavity (26).

9. Method according to claim 8, in which the frame structure (1) is designed to be separable in the region of the channels (30).

10. Frame structure (1), comprising a first cavity (26) and a second cavity (12) which surrounds the first cavity (26) at least in part, a number of channels (30) which connect the first cavity (26) to a surface (4) and an opening (8) for the connection of a vacuum pump (10), said frame structure being suitable for carrying out the method according to either claim 8 or claim 9.

11. Frame structure (1) according to claim 10, in which a cavity (12, 26) contains an open-pored insulating material.

12. Frame structure (1) according to either claim 10 or claim 11, which has a substantially trapezoidal cross section.

13. Frame structure (1) according to claim 12, in which the surface (4) which corresponds to the longer of the parallel sides of the trapezium is detachable.

14. Frame structure (1) according to any of claims 10 to 13, which comprises an electrical connecting element.

## Revendications

1. Procédé de fixation d'une plaque de couverture (6) à une structure de cadre (1) formée sur la plaque de couverture (6),
**caractérisé en ce que**
la structure de cadre (1) présente une cavité (12), un certain nombre de canaux (2) reliant la cavité (12) à une surface (4), et une ouverture pour le raccordement d'une pompe à vide (10), dans lequel la cavité (12) est étanche aux gaz jusqu'aux canaux (2) et à l'ouverture (8), et dans lequel
la pompe à vide (10) est raccordée à l'ouverture (8) et est mise en marche,
la plaque de couverture (6) est disposée sur la surface (4) au-dessus des canaux (2), et
la plaque de couverture (6) est fixée à la surface (4).

2. Procédé selon la revendication 1, dans lequel un élément d'étanchéité (14) est disposé entre la surface (4) et la plaque de couverture (6).

3. Procédé selon l'une des revendications précédentes, dans lequel une colle est mise en place entre la surface (4) et la plaque de couverture (6).

4. Procédé selon l'une des revendications précédentes, dans lequel un élément de liaison (20) mécanique amovible est mis en place entre la surface (4) et la plaque de couverture (6).

5. Procédé selon l'une des revendications précédentes, dans lequel une pluralité de plaques de couverture (6) est disposée et/ou la structure de cadre (1) présente une pluralité de cavités (12) affectées respectivement à une plaque de couverture (6).

6. Procédé selon l'une des revendications précédentes, dans lequel la structure de cadre (1) avec la plaque de couverture (6) et un autre corps de fermeture (16) forme une cavité (18) centrale, et la cavité (18) centrale est évacuée.

7. Procédé selon la revendication 6, dans lequel la pression de la cavité (18) centrale est inférieure à la pression de la cavité (12) de la structure de cadre (1).

8. Procédé de fixation d'une plaque de couverture (6), comprenant deux couches de couverture (28) disposées essentiellement parallèlement l'une à l'autre, à une structure de cadre (1) formée sur la zone de bord de la plaque de couverture (6),
**caractérisé en ce que**
la structure de cadre (1) présente une première cavité (26) et une deuxième cavité (12) entourant au moins partiellement la première cavité (26), un certain nombre de canaux (30) reliant la première cavité (26) à la surface (4), et une ouverture (8) pour le raccordement d'une pompe à vide (10), dans lequel
une pompe à vide (10) est raccordée à l'ouverture (8) et mise en marche,
la plaque de couverture (6) est, avec sa zone de bord, disposée sur la surface (4) au-dessus des canaux (30) de telle sorte que ceux-ci sont situés entre les deux couches de couverture (28) de la plaque de couverture (6), et
la première et la deuxième cavité (12, 26) sont évacuées, dans lequel la deuxième cavité (12) présente une pression plus élevée que la première cavité (26).

9. Procédé selon la revendication 8, dans lequel la structure de cadre (1) est constituée de façon séparable dans la zone des canaux (30).

10. Structure de cadre (1), comprenant une première cavité (26) et une deuxième cavité (12) entourant au moins partiellement la première cavité (26), un certain nombre de canaux (30) reliant la première cavité (26) à une surface (4), et une ouverture (8) pour le raccordement d'une pompe à vide (10), appropriée pour la réalisation du procédé selon la revendication 8 ou 9.

11. Structure de cadre (1) selon la revendication 10, dans lequel une cavité (12, 26) contient un matériau isolant à pores ouverts.

12. Structure de cadre (1) selon la revendication 10 ou 11, qui présente une section transversale essentiellement trapézoïdale.

13. Structure de cadre (1) selon la revendication 12, dans laquelle la surface (4) correspondant au plus long des côtés parallèles du trapèze est amovible.

14. Structure de cadre (1) selon l'une des revendications 10 à 13, qui comprend un élément de raccordement électrique.
